(19) Europäisches Patentamt
European Patent Office
Office européen des brevets

(11) **EP 3 709 279 A1**

(12) **EUROPEAN PATENT APPLICATION**
published in accordance with Art. 153(4) EPC

(43) Date of publication:
**16.09.2020 Bulletin 2020/38**

(51) Int Cl.:
*G08G 1/16* (2006.01)   *G01S 13/86* (2006.01)
*G01S 13/93* (2020.01)   *G01S 15/93* (2020.01)
*G01S 17/93* (2020.01)   *B60W 30/095* (2012.01)
*B60W 30/12* (2020.01)   *B60W 30/14* (2006.01)
*B60W 40/02* (2006.01)

(21) Application number: 18880262.3

(22) Date of filing: 16.11.2018

(86) International application number:
**PCT/JP2018/042421**

(87) International publication number:
**WO 2019/102938 (31.05.2019 Gazette 2019/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 22.11.2017 JP 2017224670

(71) Applicant: Mazda Motor Corporation
Aki-gun
Hiroshima 730-8670 (JP)

(72) Inventors:
• **KAWABATA, Suguru**
**Aki-gun**
**Hiroshima 730-8670 (JP)**
• **IKENOUCHI, Takahito**
**Aki-gun**
**Hiroshima 730-8670 (JP)**
• **KOYAMA, Kanichi**
**Aki-gun**
**Hiroshima 730-8670 (JP)**
• **MORITANI, Takayuki**
**Aki-gun**
**Hiroshima 730-8670 (JP)**

(74) Representative: **Behr, Wolfgang et al**
**Lorenz Seidler Gossel**
**Rechtsanwälte Patentanwälte**
**Partnerschaft mbB**
**Widenmayerstraße 23**
**80538 München (DE)**

(54) **TARGET DETECTION DEVICE FOR VEHICLE**

(57)    A target detection device provided in a vehicle includes: a detector detecting at least one target existing in a peripheral region of the vehicle; a detection controller outputting target data on the at least one target selected based on a predetermined criterion among the detected at least one target; a central controller controlling the vehicle based on the output target data; a storage storing divided region information representing divided regions generated by preliminarily dividing the peripheral region; and a drive assist controller performing control to assist driving of the vehicle. The detection controller selects at least one first target detected in one or more first divided regions of the divided regions set according to an operation state of the drive assist controller, in preference to at least one second target detected in a second divided region other than the one or more first divided regions.

FIG. 1

EP 3 709 279 A1

## Description

## Technical Field

The technique disclosed herein relates to a target detection device for a vehicle that detects a target existing in a peripheral region of the vehicle.

## Background Art

Conventionally, there has been known a vehicle provided with a detector that detects a target such as a person or an object existing in a peripheral region of the vehicle (e.g., see Patent Literature 1). In such a vehicle, generally, a detection controller provided for each detector calculates a position, a relative speed to the vehicle and the like, of a detected target. Then, target data including the calculated position and relative speed of the target is transmitted from the detection controller to a central controller that controls the entire vehicle.

The detector detects many targets, such as a white line that defines a lane in which a vehicle travels, other vehicles traveling in a traveling lane of the vehicle and in an adjacent lane of the vehicle, a pedestrian walking on a sidewalk, and a traffic sign installed on a side of a road. Thus, the target data transmitted from the detection controller to the central controller has an enormous amount of data to cause increase in processing load on the central controller. Therefore, in the vehicle described in Patent Literature 1, a detection range of a target in front of the vehicle is divided into a plurality of divided regions, and a divided region set as a detection object for detecting a target is changed in accordance with vehicle speed and a steering angle. Accordingly, the amount of target data transmitted to the central controller is limited to reduce the processing load on the central controller.

However, when the divided region set as the detection object for detecting a target is changed in accordance with vehicle speed and a steering angle, in a case where a target, which should be detected, exists in a divided region which is not set as the detection object for detecting a target, the central controller cannot obtain data on this target.

## Citation List

## Patent Literature

Patent Literature 1: JP 2009-58316 A

## Summary of Invention

It is an object of the technique disclosed herein to suppress as much as possible, while obtaining data on a target in an important divided region, a situation in which data on a target in a divided region other than the important divided region cannot be obtained.

To solve the above-described problems, an aspect of the technique disclosed herein is a target detection device for a vehicle, the target detection device provided in a vehicle and includes:

a detector which is configured to detect at least one target existing in a peripheral region of the vehicle;
a detection controller which is configured to output target data on the at least one target selected based on a predetermined criterion among the at least one target detected by the detector;
a central controller which is configured to control the vehicle based on the target data output from the detection controller;
a storage which stores divided region information representing a plurality of divided regions generated by preliminarily dividing the peripheral region; and
a drive assist controller which is configured to perform control to assist driving of the vehicle by a driver, wherein
the detection controller is configured to select at least one first target in preference to at least one second target, the at least one first target being detected in one or more first divided regions of the plurality of divided regions, the one or more first divided regions being set according to an operation state of the drive assist controller, the at least one second target being detected in a second divided region other than the one or more first divided regions.

According to the target detection device for a vehicle, target data necessary for controlling the vehicle can be preferentially obtained according to an operation state of the drive assist controller.

## Brief Description of Drawings

FIG. 1 is a block diagram schematically illustrating a configuration of a vehicle including a target detection device.
FIG. 2 is a diagram schematically illustrating an example of a divided region.
FIG. 3 is a diagram schematically illustrating an example of a region score set for each divided region.
FIG. 4 is a diagram schematically illustrating an example of specific divided region information.
FIG. 5 is a flowchart schematically illustrating an example of a setting procedure of a specific divided region.
FIG. 6 is a flowchart schematically illustrating a subroutine of FIG. 5.
FIG. 7 is a flowchart schematically illustrating a subroutine of FIG. 5.
FIG. 8 is a flowchart schematically illustrating a subroutine of FIG. 5.
FIG. 9 is a flowchart schematically illustrating a subroutine of FIG. 5.

FIG. 10 is a flowchart schematically illustrating an example of an operation procedure of a CPU of each sensor ECU.

FIG. 11 is a flowchart schematically illustrating an example of an operation procedure of a CPU of an integrated ECU.

FIG. 12 is a sequence diagram schematically illustrating a procedure of data transmission and reception between the integrated ECU and the sensor ECU.

**Description of Embodiments**

(Viewpoint of an aspect according to the present disclosure)

First, a viewpoint of an aspect according to the present disclosure will be described. As described above, in the vehicle described in Patent Literature 1, a detection range of a target in front of the vehicle is divided into a plurality of divided regions, and a divided region for detecting the target is changed according to vehicle speed and a steering angle. Accordingly, as described above, even when a target, which should be detected, exists in a divided region which is not a region for detecting a target, the central controller cannot recognize this target.

In addition, even if the divided region for detecting the target is changed, when many targets exist in the divided region for detecting the target, the target data, transmitted from the detection controller to the central controller, also become an enormous amount of data. In this case, a processing load on the central controller cannot be reduced.

In consideration of transmitting an enormous amount of target data from the detection controller to the central controller, it is necessary to construct a communication cable, from the detection controller to the central controller, to have a sufficient communication capacity. As a result, the cost of the device will increase.

In view of the above, the present inventors have conceived of a target detection device for a vehicle, which reliably obtains target data on a required target, limits the amount of target data transmitted from the detection controller to the central controller, and of which a cost does not increase.

(Embodiment)

Hereinafter, embodiments of the present disclosure will be described with reference to the drawings. In each of the drawings, the same reference numerals are given to the same elements, and duplicated description will be appropriately omitted.

(Configuration)

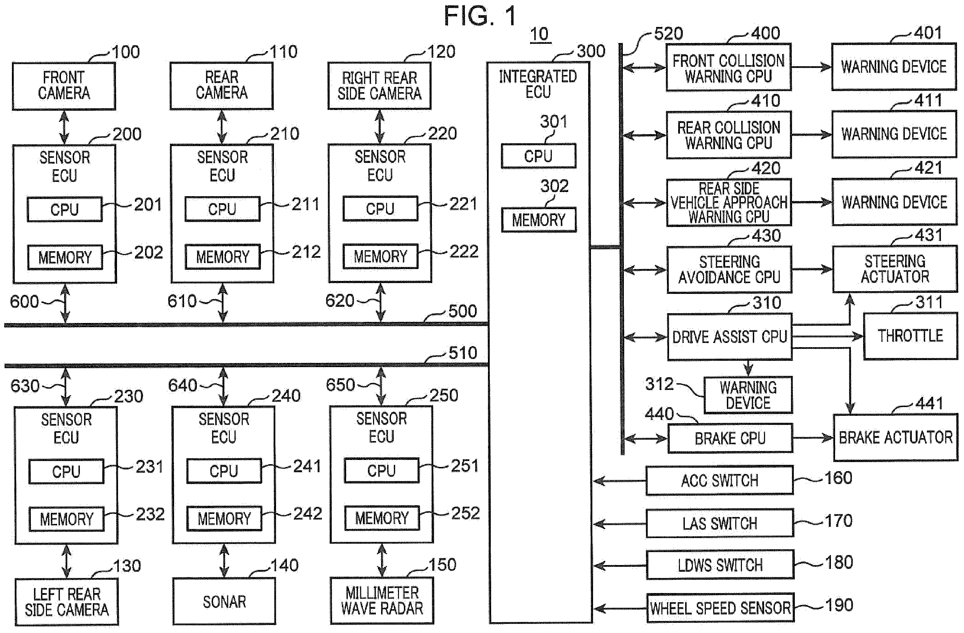

FIG. 1 is a block diagram schematically illustrating a configuration of a vehicle 10 including a target detection device of the present embodiment. The vehicle 10 is a four-wheeled vehicle in the present embodiment, for example. As illustrated in FIG. 1, the vehicle 10 includes a front camera 100, a rear camera 110, a right rear side camera 120, a left rear side camera 130, a sonar 140, a millimeter wave radar 150, and sensor electronic control units (sensor ECUs) 200, 210, 220, 230, 240, and 250 that are respectively electrically connected to them. The sensor ECU 200 includes a central processing unit (CPU) 201 and a memory 202. The sensor ECUs 210, 220, 230, 240, and 250 are each configured similarly to the sensor ECU 200, and include CPUs 201, ..., 251 and memories 202, ..., 252, respectively.

As illustrated in FIG. 1, the vehicle 10 further includes an adaptive cruise control (ACC) switch 160, a lane keep assist system (LAS) switch 170, a lane departure warning system (LDWS) switch 180, a wheel speed sensor 190, an integrated ECU 300, a drive assist CPU 310, a front collision warning CPU 400, a rear collision warning CPU 410, a side vehicle approach warning CPU 420, a steering avoidance CPU 430, and a brake CPU 440.

The sensor ECUs 200, 210, 220 are connected to the integrated ECU 300 via sensor cables 600, 610, 620, respectively, and an in-vehicle bus 500. The sensor ECUs 230, 240, and 250 are connected to the integrated ECU 300 via sensor cables 630, 640, and 650, respectively, and an in-vehicle bus 510. The integrated ECU 300 and the CPUs 310, 400, 410, 420, 430, 440 are connected to each other via an in-vehicle bus 520. While in FIG. 1, the in-vehicle buses 500, 510, and 520 are illustrated as separate lines from each other, they may be configured as one bus line.

The memories 202, ..., 252 of the sensor ECUs 200, ..., 250 are respectively configured by a semiconductor memory and the like, for example, and respectively include a read only memory (ROM), random access memory (RAM), an electrically erasable and programmable ROM (EEPROM), and the like, for example. The ROMs of the memories 202, ..., 252 store control programs for operating the CPUs 201, ...,251, respectively.

The front camera 100 is attached to the center of the front of the vehicle 10 (e.g., the center of an upper portion of the windshield) with an optical axis of the front camera 100 oriented to the front of the vehicle 10. The rear camera 110 is attached to the center of the rear of the vehicle 10 (e.g., near the rear license plate) with an optical axis of the rear camera 110 oriented to the rear of the vehicle 10. The right rear side camera 120 is attached to the rear right of the vehicle 10 (e.g., a right end of the rear bumper) with an optical axis of the right rear side camera 120 oriented to the right rear side of the vehicle 10. The left rear side camera 130 is attached to the rear left side of the vehicle 10 (e.g., a left end of the rear bumper) with an optical axis of the left rear side camera 130 oriented to the left rear side of the vehicle 10.

Each of the cameras 100 to 130 captures an image of a fan-shaped imaging range centered on the optical axis every predetermined time (e.g., 1/60 of a second). The cameras 100 to 130 output captured image data to the sensor ECUs 200 to 230, respectively, at predetermined time intervals (e.g., 1/60 of a second). The CPUs 201 to 231 of the sensor ECUs 200 to 230 detect targets existing in an imaging range, such as other vehicles traveling in a peripheral region of the vehicle 10, pedestrians walking near a traveling lane, boundary lines (e.g., white lines drawn intermittently) representing a boundary of lanes drawn on the road, and traffic signs installed on a side of a road, based on image data output from the cameras 100 to 130, respectively, by a template matching, for example. The cameras 100 to 130 each have a relatively wide viewing angle and a long effective distance of several hundred meters, and thus can each detect targets in a relatively wide range.

The sonar 140 emits a sound wave, and detects targets by receiving a reflected wave of the emitted sound wave reflected by the targets. The sonar 140 is attached to the center of the rear of the vehicle 10 (e.g., the center of a lower portion of the rear window) with an emission direction of the sound wave oriented to the rear of the vehicle 10. The sonar 140 has a short effective distance, and thus is suitable for detecting close targets.

The millimeter wave radar 150 emits a millimeter wave that is a radio wave having a wavelength of 1 to 10 mm, and detects targets by receiving a reflected wave of the emitted millimeter wave reflected by the targets. The millimeter wave radar 150 is attached to the center of the front of the vehicle 10 (e.g., at the center of a front grille) with an emission direction of the millimeter wave oriented to the front of the vehicle 10. The millimeter wave radar 150 has a long effective distance of 200 m or more, and thus can detect relatively distant targets.

The CPUs 201 to 251 of the sensor ECUs 200 to 250 control operations of the cameras 100 to 130, the sonar 140, and the millimeter wave radar 150, respectively. The cameras 100 to 130, the sonar 140, and the millimeter wave radar 150 detect targets existing in the peripheral region of the vehicle 10, and output detection signals to the sensor ECUs 200 to 250, respectively. The CPUs 201 to 251 of the sensor ECUs 200 to 250 generate target data on the detected targets based on the detection signals received from the cameras 100 to 130, the sonar 140, and the millimeter wave radar 150, respectively. Functions of the CPUs 201 to 251 will be further described later.

In the present embodiment, the cameras 100 to 130, the sonar 140, and the millimeter wave radar 150 each correspond to an example of the detector, and the CPUs 201 to 251 each correspond to an example of the detection controller. The detector that detects targets is not limited to a camera, a sonar, or a millimeter wave radar. For example, other detectors may be provided, such as a laser radar that emits laser light, and detects targets by receiving reflected waves of the emitted laser light reflected by the targets. In that case, a sensor ECU may be provided for each detector.

The switches 160, 170, and 180 are switches operated by an occupant of the vehicle 10, and respectively output signals indicating ON-OFF state of the switches to the integrated ECU 300. The wheel speed sensor 190 detects rotation speed of a wheel of the vehicle 10, and outputs wheel speed information indicating the detected rotation speed of the wheel to the integrated ECU 300.

The integrated ECU 300 controls each part of the vehicle 10. The integrated ECU 300 includes a CPU 301 (corresponding to an example of the central controller) and a memory 302. The memory 302 is configured by a semiconductor memory, for example, and includes a ROM, a RAM, an EEPROM, and the like, for example. The ROM of the memory 302 stores an overall control program of the vehicle 10 that causes the CPU 301 to operate. The CPU 301 operates according to the overall control program stored in the memory 302 to control each part of the vehicle 10.

The front collision warning CPU 400 activates a warning device 401 when the CPU 301 of the integrated ECU 300 determines that the vehicle 10 may collide with a target ahead. The rear collision warning CPU 410 activates a warning device 411 when the CPU 301 determines that the vehicle 10 may collide with a target behind. The rear side vehicle approach warning CPU 420 activates a warning device 421 when the CPU 301 determines that a target approaches the rear side of the vehicle 10. The warning devices 401, 411, and 421 each may be configured by an electronic buzzer, for example, and in that case, an occupant of the vehicle 10 is alerted by a sound.

The steering avoidance CPU 430 controls a steering actuator 431 in response to a command signal from the CPU 301 to change a traveling direction of the vehicle 10, thereby preventing the vehicle 10 from colliding with a target ahead. The brake CPU 440 controls a brake actuator 441 in response to a command signal from the CPU 301 to decelerate the vehicle 10, thereby preventing the vehicle 10 from colliding with a target ahead.

The integrated ECU 300 notifies the drive assist CPU 310 of an ON-OFF state of each of the switches 160, 170, and 180. The drive assist CPU 310 (corresponding to an example of the drive assist controller) controls a throttle 311, a warning device 312, the steering actuator 431, and the brake actuator 441 according to the ON-OFF state of each of the switches 160, 170, and 180 notified from the integrated ECU 300 to assist driving of the vehicle 10 by a driver.

For example, when the ACC switch 160 is on, the drive assist CPU 310 performs adaptive cruise control (hereinafter, referred to as "follow-up traveling control") for causing the vehicle 10 to follow a preceding vehicle which travels preceding the vehicle 10 in front of the vehicle 10. For example, when the LAS switch 170 is on, the drive assist CPU 310 performs lane keeping assist control for keeping a lane in which the vehicle 10 travels. For example, when the LDWS switch 180 is on, the drive assist CPU 310 performs lane departure warning control for activating the warning device 312 when the vehicle 10 departs from its traveling lane. In the present embodiment, the LDWS switch 180 is configured to be able to be turned on only when the LAS switch 170 is on.

As described above, the CPUs 201 to 251 of the sensor ECUs 200 to 250 generate target data on detected targets based on detection signals received from the cameras 100 to 130, the sonar 140, and the millimeter wave radar 150, respectively. In the present embodiment, the CPUs 201 to 231 generate target data every 50 msec, for example. In the present embodiment, the CPUs 241 and 251 generate target data every 10 msec, for example. The CPUs 201 to 251 of the sensor ECUs 200 to 250 function similarly except for a generating cycle of the target data. Thus, the CPU 201 of the sensor ECU 200 will be described below.

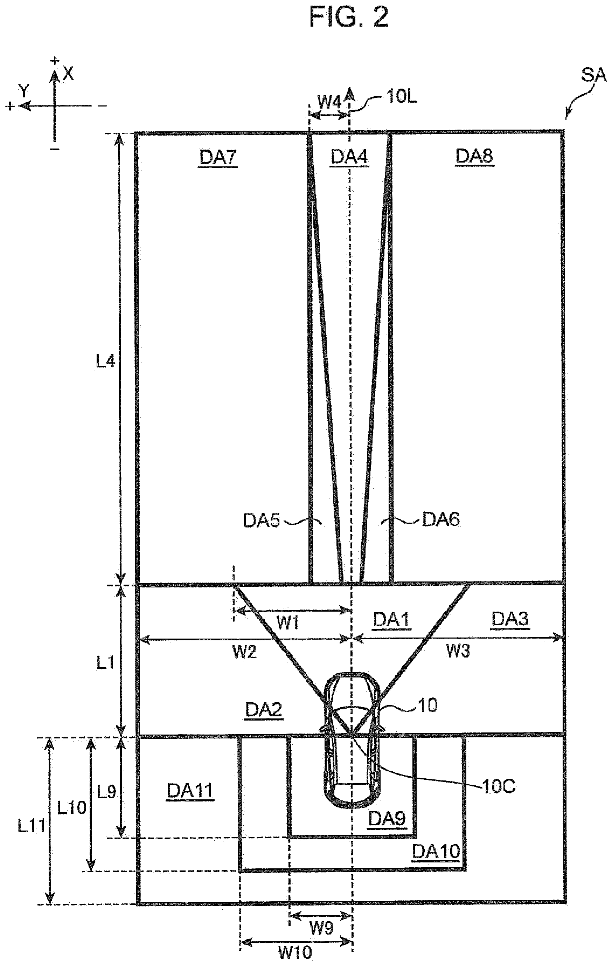

The CPU 201 generates target data including identification data (ID), position, and relative speed. Specifically, the CPU 201 assigns a unique ID to each target so that each target detected by the camera 100 can be identified. The CPU 201 calculates a position of each target. As illustrated in FIG. 2 described below, the CPU 201 calculates a position of a target as coordinates on an XY plane including an original point at a center 10C of the vehicle 10, an X-axis parallel to a front-rear direction of the vehicle 10, being positive from the original point toward the front of the vehicle 10, and a Y-axis parallel to a width direction of the vehicle 10, being positive from the original point toward the left of the vehicle 10.

The CPU 201 calculates relative speed of each target with respect to the vehicle 10 based on the amount of movement from a position of each target calculated last time (50 msec before in the present embodiment) to a position of each target calculated this time. The CPU 201 assigns a positive value to relative speed of a target approaching the vehicle 10, and a negative value to relative speed of a target moving away from the vehicle 10. The CPU 201 also calculates reliability indicating probability of a position of each target.

The CPU 201 determines a divided region where a target exists based on a calculated position of the target. Here, with reference to FIG. 2, divided regions will be described.

FIG. 2 is a diagram schematically illustrating an example of the divided regions set by dividing a peripheral region SA of the vehicle 10. In the present embodiment, as illustrated in FIG. 2, the peripheral region SA of the vehicle 10 is divided into eleven divided regions, i.e., a first divided region DA1 to an eleventh divided region DA11. The peripheral region SA of the vehicle 10 in which the eleven divided regions are combined has a rectangular shape elongated in the front-rear direction of the vehicle 10. The eleven divided regions are set to have line symmetry with respect to a straight line 10L in an X-axis direction passing through the center 10C of the vehicle 10.

The first divided region DA1 to the third divided region DA3 are regions which are set forward of the center 10C of the vehicle 10 and are close to the vehicle 10. A region in which three regions of the first divided region DA1 to the third divided region DA3 are combined has a rectangular shape elongated in the width direction of the vehicle 10 (i.e., the Y-axis direction). The first divided region DA1 has a vertex at the center 10C of the vehicle 10, and has an isosceles triangular shape having line symmetry with respect to the straight line 10L. A width W1, which corresponds to half of the base of the first divided region DA1 in the shape of an isosceles triangle, is set to a relatively short distance of about 30 m, for example.

The second divided region DA2 and the third divided region DA3 respectively have trapezoidal shapes obtained by removing the first divided region DA1 from the rectangular shape, and are formed line symmetry with each other with respect to the straight line 10L. A width W2, which corresponds to the lower side of the second divided region DA2 in the shape of a trapezoid, is set to a relatively long distance of about 100 m, for example. The second divided region DA2 and the third divided region DA3 are formed line symmetry with each other with respect to the straight line 10L, as described above. Thus, the width W3 corresponding to the lower side of the third divided region DA3 is W3 = W2.

A length L1 of the first divided region DA1 to the third divided region DA3 is set to a relatively short distance of about 10 m, for example, when the vehicle 10 is stopped. The length L1 is set to increase with increase in speed of the vehicle 10 to detect a distant object as a target. When the vehicle 10 travels at a high speed of 100 km/h for example, the length L1 is set to about 60 m for example.

The fourth divided region DA4 to the eighth divided region DA8 are regions set in front of the first divided region DA1 to the third divided region DA3 when viewed from the vehicle 10. A region in which these five divided regions are combined has a rectangular shape and has the same width, as the region in which the first divided region DA1 to the third divided region DA3 are combined.

A region in which the fourth divided region DA4 to the sixth divided region DA6 are combined has a rectangular shape. The fifth divided region DA5 and the sixth divided region DA6 are formed line symmetry with each other with respect to the straight line 10L, and respectively have the shape of a right triangle. The fourth divided region DA4 has a trapezoidal shape obtained by removing the fifth divided region DA5 and the sixth divided region DA6 from the rectangular shape, and is formed line symmetry with respect to the straight line 10L. Each of the seventh divided region DA7 and the eighth divided region DA8 has a rectangular shape.

A length L4 of the fourth divided region DA4 to the eighth divided region DA8 is set to a relatively long distance of about 200 m, for example. A width W4, which corresponds to half of the base of the fourth divided region DA4 on a front side, is set to a relatively short distance of about 5 m, for example. The fifth divided region DA5 and the sixth divided region DA6 each have the shape of a right triangle, and are each set so that a line which is extended from a hypotenuse of the right triangle passes through the center 10C of the vehicle 10.

The ninth divided region DA9 to the eleventh divided region DA11 are regions which are set behind the center 10C of the vehicle 10 and are close to the vehicle 10. A region in which these three divided regions are combined has a rectangular shape and has the same width as the region in which the first divided region DA1 to the third divided region DA3 are combined.

The ninth divided region DA9 is a region immediately behind the vehicle 10, and is a region in the rectangular shape formed line symmetry with respect to the straight line 10L. The tenth divided region DA10 is a region formed to surround the ninth divided region DA9, and is a U-shaped region formed line symmetry with respect to the straight line 10L. The eleventh divided region DA11 is a region formed to further surround the tenth divided region DA10, and is a U-shaped region formed line symmetry with respect to the straight line 10L.

A length L9 of the ninth divided region DA9 is set to a relatively short distance of about 10 m, for example. A width W9, which corresponds to half of a width of the ninth divided region DA9, is set to a relatively short distance of about 10 m, for example. A length L10 of the tenth divided region DA10 is set to a relatively short distance of about 15 m, for example. A width W10, which corresponds to half of a width of the tenth divided region DA10, is set to a relatively short distance of about 15 m, for example. A length L11 of the eleventh divided region DA11 is set to a relatively short distance of about 25 m, for example.

Boundary values representing the first divided region DA1 to the eleventh divided region DA11 are preliminarily calculated as coordinates on the XY plane with the center 10C of the vehicle 10 as the original point, using distances such as the length L1 and the width W1, and are stored in the memories 202 to 252. As the boundary values, coordinates of vertices of each region can be used, for example. Thus, the CPU 201 can determine a divided region where the target exists based on the calculated coordinates indicating a position of the target and the boundary values of each divided region stored in the memory 202. In the present embodiment, each of the memories 202 to 252 corresponds to an example of the storage.

Meaning of each divided region will be briefly described. The first divided region DA1 to the third divided region DA3 and the ninth divided region DA9, which are closest to the vehicle 10, are each a collision avoidance region, the vehicle 10 having to avoid colliding with a target existing in these regions.

The fourth divided region DA4 is a region corresponding to the lane in which the vehicle 10 travels. The fifth divided region DA5 is a region corresponding to a left adjacent lane of the lane in which the vehicle 10 travels. The sixth divided region DA6 is a region corresponding to a right adjacent lane of the lane in which the vehicle 10 travels. The fourth divided region DA4 to the sixth divided region DA6 are each a collision warning region, a possibility of the vehicle 10 colliding with a target existing in these regions having to be warned. The fourth divided region DA4 to the sixth divided region DA6 are each also a follow-up traveling region, the vehicle 10 traveling to follow a preceding vehicle existing in these regions.

The seventh divided region DA7 is a region corresponding to a left side of the left adjacent lane (the fifth divided region DA5). The eighth divided region DA8 is a region corresponding to a right side of the right adjacent lane (the sixth divided region DA6). The seventh divided region DA7 and the eighth divided region DA8 are each a region in which a pedestrian and other dangers should be predicted.

The tenth divided region DA10 is a collision warning region, a possibility of the vehicle 10 colliding with a target existing in this region having to be warned. The eleventh divided region DA11 is a region in which a pedestrian and other dangers should be predicted.

Returning to FIG. 1, the CPU 201 of the sensor ECU 200 calculates a priority score of a target in order to determine a target which should be preferentially considered. The CPU 201 calculates a priority score P using Equation (1), for example.

$$P = Sa + Sd + Sv \quad (1)$$

where the symbol Sa represents a region score, the symbol Sd represents a distance score, and the symbol Sv represents a relative speed score.

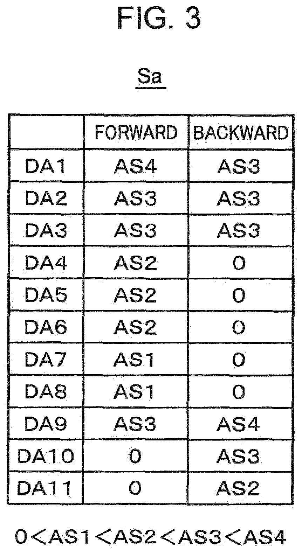

FIG. 3 is a diagram schematically illustrating an example of the region score Sa set for each divided region illustrated in FIG. 2. As illustrated in FIG. 3, the region score Sa is set for each of the first divided region DA1 to the eleventh divided region DA11 in two cases where the vehicle 10 travels forward and where the vehicle 10 travels backward. For example, when the vehicle 10 travels forward, the first divided region DA1 immediately in front of the vehicle 10 has a region score set to the highest value AS4, the second, third, and ninth divided regions DA2, DA3, and DA9 close to the vehicle 10 each have a region score set to the next highest value AS3, and the tenth and eleventh divided regions DA10 and DA11 behind the vehicle 10 each have a region score set to zero.

For example, when the vehicle 10 travels backward, the ninth divided region DA9 immediately behind the vehicle 10 has a region score set to the highest value AS4, the first to third and tenth divided regions DA1 to DA3 and DA10 close to the vehicle 10 each have a region score set to the next highest value AS3, and the fourth to eighth divided regions DA4 to DA8 in front of and away from the vehicle 10 each have a region score set to zero.

The distance score Sd in Equation (1) is represented by Equation (2), for example, where L [m] is a distance from the center 10C of the vehicle 10 to a closest point of a target at which the target is closest to the center 10C.

$$Sd = \alpha / L \quad (2)$$

As can be seen from Equation (2), the distance score Sd increases as the target is located closer to the vehicle 10. The parameter $\alpha$ is a positive value, and in the present embodiment, $\alpha = 1$ [m], for example. When $L < \alpha$, it is defined as $L = \alpha$. Thus, the distance score Sd has a maximum value Sd = 1 when $L \leq \alpha$. The parameter $\alpha$ may have a numerical value that can be changed.

The relative speed score Sv in Equation (1) is represented by Equation (3), for example, where V [m/s] is relative speed at the closest point of the target to the vehicle 10.

$$Sv = \beta \times V \quad (3)$$

When the target approaches the vehicle 10, the relative speed V > 0 is established, and the relative speed score Sv is added in Equation (1) for calculating the priority score P. On the other hand, when the target moves away from the vehicle 10, V < 0 is established, and the relative speed score Sv is subtracted in Equation (1) for calculating the priority score P. As can be seen from Equation (3), the relative speed score Sv increases as the target approaches the vehicle 10 at a higher speed.

The parameter $\beta$ is a positive value, and in the present embodiment, $\beta = 0.03$ [h/km], for example. Thus, when the relative speed V = 33 [km/h], the relative speed score Sv is Sv = 1. When the relative speed V exceeds 33 [km/h], the relative speed score Sv is limited to Sv = 1. In other words, the relative speed score Sv is set to have an upper limit of Sv = 1. The parameter $\beta$ may have a numerical value that can be changed.

The CPU 201 further transmits target data on a target to the integrated ECU 300 via the sensor cable 600 and the in-vehicle bus 500. The in-vehicle buses 500, 510, and 520 each have a sufficient communication capacity, so that the amount of data to be transmitted is not limited. However, the sensor cables 600, ..., 650 are each limited in communication capacity, so that the CPU 201 can transmit only a predetermined number of target data (e.g., 12 in the present embodiment, corresponding to an example of the second maximum number of targets). To cope with this, it is conceivable that the CPU 201 selects a predetermined number (e.g., 12 in the present embodiment) of targets in descending order of the priority score P of the targets, and transmits the selected targets to the integrated ECU 300. However, in this case, information on a target that exists in a divided region closer to the vehicle 10 and that is considered to be more important may not be transmitted to the integrated ECU 300.

Thus, in the present embodiment, a specific divided region is preliminarily set among the first divided region DA1 to the eleventh divided region DA11 according to an operation state of drive assist control by the drive assist CPU 310. A target set number (corresponding to an example of the first maximum number of targets) is preliminarily set for the specific divided region (corresponding to an example of the first divided region). It is configured such that target data up to the target set number is reliably transmitted to the integrated ECU 300.

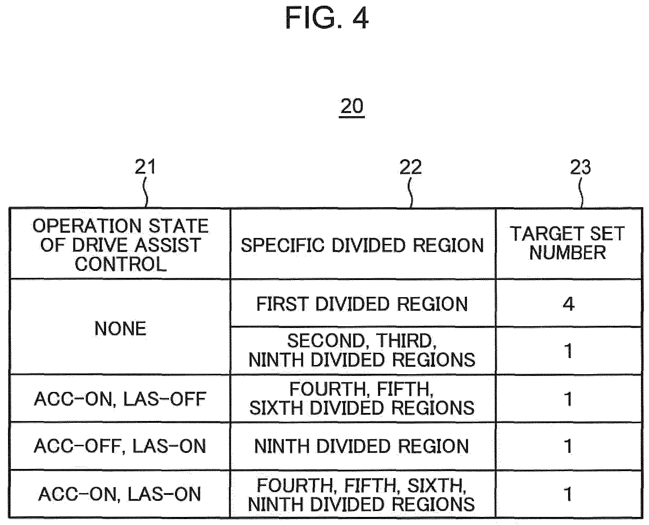

FIG. 4 is a diagram schematically illustrating an example of specific divided region information 20 preliminarily stored in the memory 302. As illustrated in FIG. 4, the specific divided region information 20 includes a column 21 indicating an operation state of the drive assist control, a column 22 indicating a specific divided region, and a column 23 indicating a target set number. As the operation state of the drive assist control by the drive assist CPU 310, the column 21 of FIG. 4 shows a total of four types of state including a state where both the ACC switch 160 and the LAS switch 170 are off (i.e., without the drive assist control), states where only one of the switches is on, and a state where both the switches are on. In the present embodiment, when the LDWS switch 180 is on, the drive assist CPU 310 performs the same control as in the LAS switch 170.

The CPU 301 of the integrated ECU 300 reads out a specific divided region and a target set number corresponding to ON-OFF states of the ACC switch 160 and the LAS switch 170 from the specific divided region information 20 stored in the memory 302. When the vehicle 10 starts traveling, the CPU 301 may read out the specific divided region and the target set number corresponding to the state where both the ACC switch 160 and the LAS switch 170 are off (i.e., without the drive assist control). The CPU 301 notifies the sensor ECUs 200 to 250 of information indicating the read-out specific divided region and target set number. The CPUs 201 to 251 of the sensor ECUs 200 to 250 set the specific divided region and the target set number based on the information notified from the CPU 301.

When the ACC switch 160 is off and the LAS switch 170 is off (i.e., when there is no drive assist control), a region close to the vehicle 10 is important. Thus, as illustrated in FIG. 4, the first to third and ninth divided regions DA1 to DA3 and DA9 close to the vehicle 10 are set as specific divided regions. Then, the first divided region DA1 is set to have a target set number of "4". Specifically, even when a target existing in the first divided region DA1 has a priority score P lower than a priority score P of a target (corresponding to an example of the at least one second target) existing in another divided region (corresponding to an example of the second divided region), target data on all targets is transmitted to the integrated ECU 300 in the case where the first divided region DA1 includes four or less targets. When the first divided region DA1 includes five or more targets, target data on four targets, which is the target set number, is transmitted to the integrated ECU 300.

The second, third, and ninth divided regions DA2, DA3, and DA9 are each set to have target set numbers of "1". Specifically, even when targets existing in the second, third, and ninth divided regions DA2, DA3, and DA9 each have a priority score P lower than a priority score P of a target (corresponding to an example of the at least one second target) existing in another divided region (corresponding to an example of the second divided region), target data on at least one target for each region is transmitted to the integrated ECU 300, in the case where the second, third, and ninth divided regions DA2, DA3, and DA9 each include a target.

When the ACC switch 160 is on and the LAS switch 170 is off (i.e., when the follow-up traveling control is activated and the lane keep assist system is not activated, as the drive assist control), it is important to appropriately follow up a preceding vehicle. Thus, as illustrated in FIG. 4, the fourth to sixth divided regions DA4 to DA6, which are each a follow-up traveling region, are each set as a specific divided region, and are each set to have a target set number of "1". Specifically, even when targets existing in the fourth to sixth divided regions DA4 to DA6 each have a priority score P lower than a priority score P of a target (corresponding to an example of the at least one second target) existing in another divided region (corresponding to an example of the second divided region), target data on at least one target for each region is transmitted to the integrated ECU 300 in the case where the fourth to sixth divided regions DA4 to DA6 each include a target.

When the ACC switch 160 is off and the LAS switch 170 is on (i.e., when the follow-up traveling control is not activated and the lane keep assist system is activated, as the drive assist control), it is important to detect a vehicle approaching from behind to appropriately maintain a traveling lane. Thus, as illustrated in FIG. 4, the ninth divided region DA9 (corresponding to an example of the rear side region) is set as a specific divided region, and is set to have a target set number of "1". Specifically, even when a target existing in the ninth divided region DA9 has a priority score P lower than a priority score P of a target (corresponding to an example of the at least one second target) existing in another divided region (corresponding to an example of the second divided region), target data on at least one target is transmitted to the integrated ECU 300 in the case where the ninth divided region DA9 includes a target.

When the ACC switch 160 is on and the LAS switch 170 is on (i.e., when both the follow-up traveling control and the lane keep assist system operate as the drive assist control), as illustrated in FIG. 4, the fourth to sixth and ninth divided regions DA4 to DA6 and DA9 are each set as a specific divided region, and are each set to have a target set number of "1". Specifically, even when targets existing in the fourth to sixth and ninth divided regions DA4 to DA6 and DA9 each have a priority score P lower than a priority score P of a target (corresponding to an example of the at least one second target) existing in another divided region (corresponding to an example of the second divided region), target data on at least one target for each region is transmitted to the integrated ECU 300 in the case where the fourth to sixth and ninth divided regions DA4 to DA6 and DA9 each include a target.

Returning to FIG. 1, the CPU 301 of the integrated ECU 300 recognizes a target existing in the peripheral region SA of the vehicle 10 based on target data transmitted from each of the sensor ECUs 200 to 250. The cameras 100 to 130, the sonar 140, and the millimeter wave radar 150 may have detection ranges of targets, overlapping each other. For example, both the front camera 100 and the millimeter wave radar 150 detect a target existing in front of the vehicle 10. Thus, the sensor ECU 200 and the sensor ECU 250 each may transmit target data on the same target. Then, the CPU 301 of the integrated ECU 300 recognizes the target data transmitted from each of the sensor ECU 200 and the sensor ECU 250 as the target data on the same target based on a position and relative speed of the target.

(Operation)

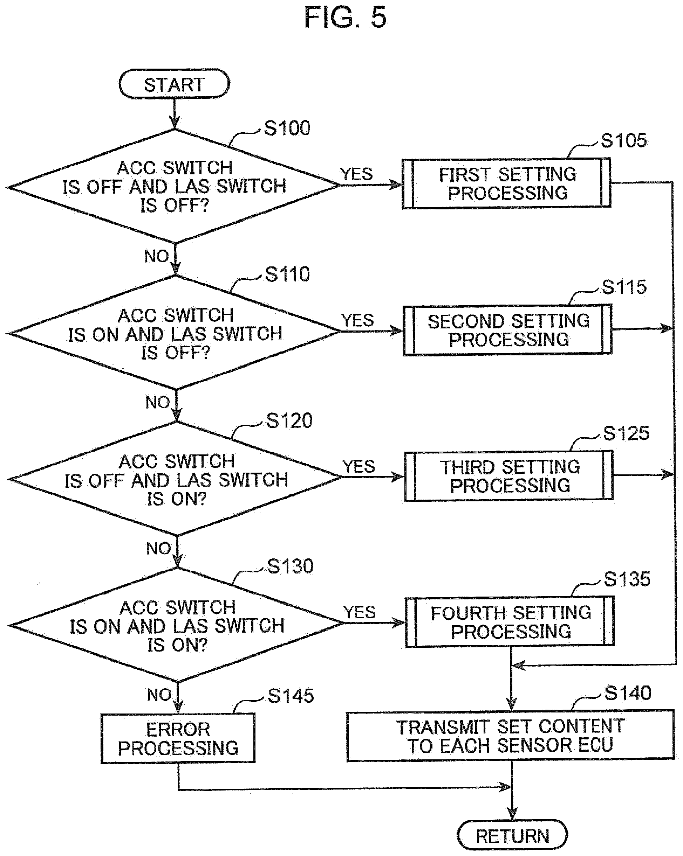

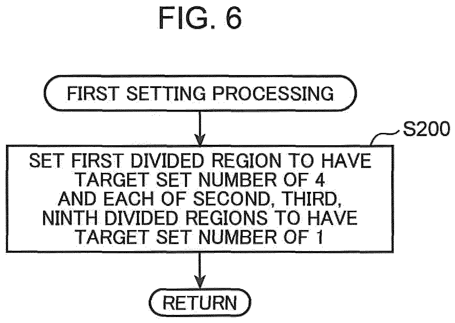

FIG. 5 is a flowchart schematically illustrating an example of a setting procedure of a specific divided region. FIGS. 6 to 9 are each a flowchart schematically illustrating a subroutine of FIG. 5. The CPU 301 of the integrated ECU 300 executes operation of FIG. 5 every 10 msec, for example.

In step S100 of FIG. 5, the CPU 301 determines whether the ACC switch 160 is off and the LAS switch 170 is off (i.e., there is no drive assist control). When the ACC switch 160 is off and the LAS switch 170 is off (YES in step S100), processing proceeds to step S105. When the state is not the ACC switch 160 is off and the LAS switch 170 is off (NO in step S100), the processing proceeds to step S110.

In step S105, the CPU 301 executes a first setting processing subroutine (FIG. 6). In step S200 in FIG. 6, the CPU 301 reads out the specific divided region in the column 22 and the target set number in the column 23 corresponding to "none" in the column 21 from the specific divided region information 20 stored in the memory 302, and sets the first divided region DA1 to have a target set number of "4", and sets each of the second, third, and ninth divided regions DA2, DA3, and DA9 to have a target set number of "1". The subroutine ends in step S200, and returning to FIG. 5, the processing proceeds to step S140.

In step S110, the CPU 301 determines whether the ACC switch 160 is on and the LAS switch 170 is off. When the ACC switch 160 is on and the LAS switch 170 is off (YES in step S110), the processing proceeds to step S115. When the state is not the ACC switch 160 is on and the LAS switch 170 is off (NO in step S 110), the processing proceeds to step S120.

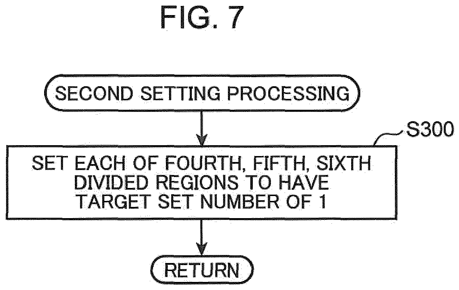

In step S115, the CPU 301 executes a second setting processing subroutine (FIG. 7). In step S300 in FIG. 7, the CPU 301 reads out the specific divided region in the column 22 and the target set number in the column 23 corresponding to "ACC-on, LAS-off' in the column 21 from the specific divided region information 20 stored in the memory 302, and sets each of the fourth, fifth, and sixth divided regions DA4, DA5, and DA6 to have a target set number of "1". The subroutine ends in step S300, and returning to FIG. 5, the processing proceeds to step S140.

In step S120, the CPU 301 determines whether the ACC switch 160 is off and the LAS switch 170 is on. When the ACC switch 160 is off and the LAS switch 170 is on (YES in step S 120), the processing proceeds to step S125. When the state is not the ACC switch 160 is off and the LAS switch 170 is on (NO in step S 120), the processing proceeds to step S130.

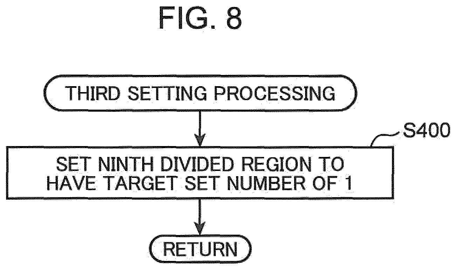

In step S125, the CPU 301 executes a third setting processing subroutine (FIG. 8). In step S400 in FIG. 8, the CPU 301 reads out the specific divided region in the column 22 and the target set number in the column 23 corresponding to "ACC-off, LAS-on" in the column 21 from the specific divided region information 20 stored in the memory 302, and sets the ninth divided region DA9 to have a target set number of "1". The subroutine ends in step S400, and returning to FIG. 5, the processing proceeds to step S140.

In step S130, the CPU 301 determines whether the ACC switch 160 is on and the LAS switch 170 is on. When the ACC switch 160 is on and the LAS switch 170 is on (YES in step S130), the processing proceeds to step S135. When the state is not the ACC switch 160 is on and the LAS switch 170 is on (NO in step S130), the processing proceeds to step S145.

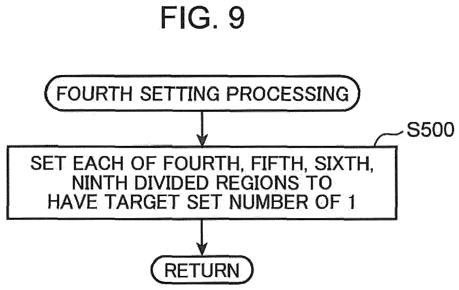

In step S135, the CPU 301 executes a fourth setting processing subroutine (FIG. 9). In step S500 in FIG. 9, the CPU 301 reads out the specific divided region in the column 22 and the target set number in the column 23 corresponding to "ACC-on, LAS-on" in the column 21 from the specific divided region information 20 stored in the memory 302, and sets each of the fourth, fifth, sixth, and ninth divided regions DA4, DA5, DA6, and DA9 to have a target set number of "1". The subroutine ends in step S500, and returning to FIG. 5, the processing proceeds to step S140.

In step S140, the CPU 301 transmits information on the divided regions set as the specific divided regions and information on the target set numbers set in the corresponding divided regions to each of the sensor ECUs 200 to 250. Then, the processing in FIG. 5 ends. The CPUs 201 to 251 of the corresponding sensor ECUs 200 to 250 store contents transmitted to the sensor ECUs 200 to 250 in the memories 202 to 252, respectively.

In step S145, the CPU 301 executes a predetermined error processing, and then, the processing in FIG. 5 ends. That is, it is impossible that all of steps S100, S110, S120, and S130 are NO, and hence, the predetermined error processing is performed in step S145.

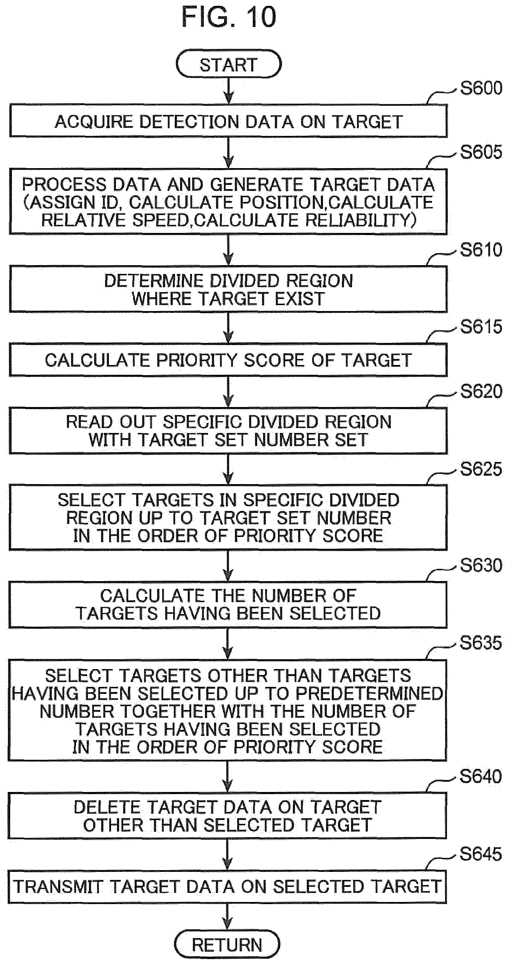

FIG. 10 is a flowchart schematically illustrating an example of an operation procedure of a CPU of each sensor ECU. The CPUs 201 to 231 of the corresponding sensor ECUs 200 to 230 execute the operation of FIG. 10 every 50 msec, for example. The CPUs 241 and 251 of the corresponding sensor ECUs 240 and 250 execute the operation of FIG. 10 every 10 msec, for example. The CPUs 201 to 251 of the corresponding sensor ECUs 200 to 250 function similarly except for an execution cycle of the operation in FIG. 10. Thus, the operation of the CPU 201 of the sensor ECU 200 is described referring to FIG. 10.

In step S600, the CPU 201 acquires target detection data from the front camera 100. In step S605, the CPU 201 processes the acquired detection data to generate target data. Specifically, the CPU 201 assigns an ID to each detected target, and calculates a position, relative speed, and reliability of each detected target to generate the target data.

In step S610, the CPU 201 determines a divided region where each target exists based on the calculated position of each target and the boundary value of each divided region stored in the memory 202. In step S615, the CPU 201 calculates a priority score of each target using Equation (1). In step S620, the CPU 201 reads out a specific divided region, in which a target set number is set, from the memory 202. As described above, regardless of presence or absence of drive assist control by the drive assist CPU 310, and of a type thereof, any one of the first to eleventh divided regions DA1 to DA11 is set as the specific divided region with the target set number set, and is stored in the memory 202. Thus, the CPU 201 reads out the specific divided region with the target set number set from the memory 202 in step S620.

In step S625, the CPU 201 selects targets existing in each specific divided region up to the corresponding target set number in the order of priority scores, and temporarily stores the ID of each selected target in the memory 202. In step S630, the CPU 201 calculates the number of selected targets whose IDs are stored in the memory 202. In step S635, the CPU 201 selects targets other than the selected targets up to a predetermined number (e.g., 12 in the present embodiment) including the number of selected targets, in the order of priority scores.

In step S640, when there is an unselected target (i.e., when detection data on targets more in number than a predetermined number of targets is acquired in step S600), the CPU 201 deletes target data on the unselected target. In step S645, the CPU 201 transmits target data on the selected target to the integrated ECU 300.

The operation of FIG. 10 causes the number of target data output from each of the sensor ECUs 200 to 250 to the corresponding one of the sensor cables 600 to 650 to be equal to or less than a predetermined number (e.g., 12 in the present embodiment). As a result, the amount of data does not exceed communication capacity of each of the sensor cables 600 to 650, so that data transmission can be suitably performed.

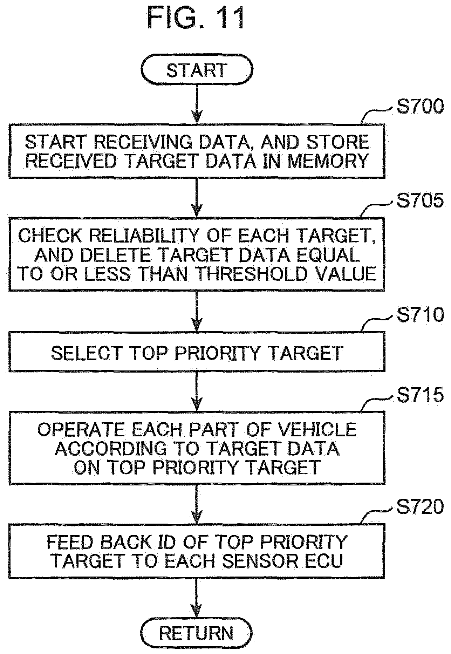

FIG. 11 is a flowchart schematically illustrating an example of an operation procedure of the CPU 301 of the integrated ECU 300. In the present embodiment, the CPU 301 of the integrated ECU 300 executes operation of FIG. 11 every 20 msec, for example.

In step S700, the CPU 301 starts receiving data from each sensor ECU, and stores the received target data in the memory 302. In step S705, the CPU 301 checks reliability of each target included in the target data, and deletes the target data with the reliability equal to or less than a predetermined threshold value.

In step S710, the CPU 301 acquires wheel speed information on the vehicle 10 from the wheel speed sensor 190. The CPU 301 calculates a collision time (TTC) of each target based on the target data on each target acquired from the corresponding one of the sensor ECUs 200 to 250, and the wheel speed information on the vehicle 10, and then selects a target having the shortest collision time as the top priority target. The collision time (TTC) is defined as a limited time by which a collision can be avoided by braking with the brake actuator 441 operated and by steering with the steering actuator 431 operated.

In step S715, the CPU 301 outputs a command signal to the drive assist CPU 310, the steering avoidance CPU 430, the brake CPU 440, and the like, and causes each part of the vehicle 10 such as the steering actuator 431 and the brake actuator 441 to operate in accordance with the target data of the top priority target, thereby avoiding collision with the top priority target. In step S720, the CPU 301 feeds back the ID of the top priority target to each of the sensor ECUs 200 to 250.

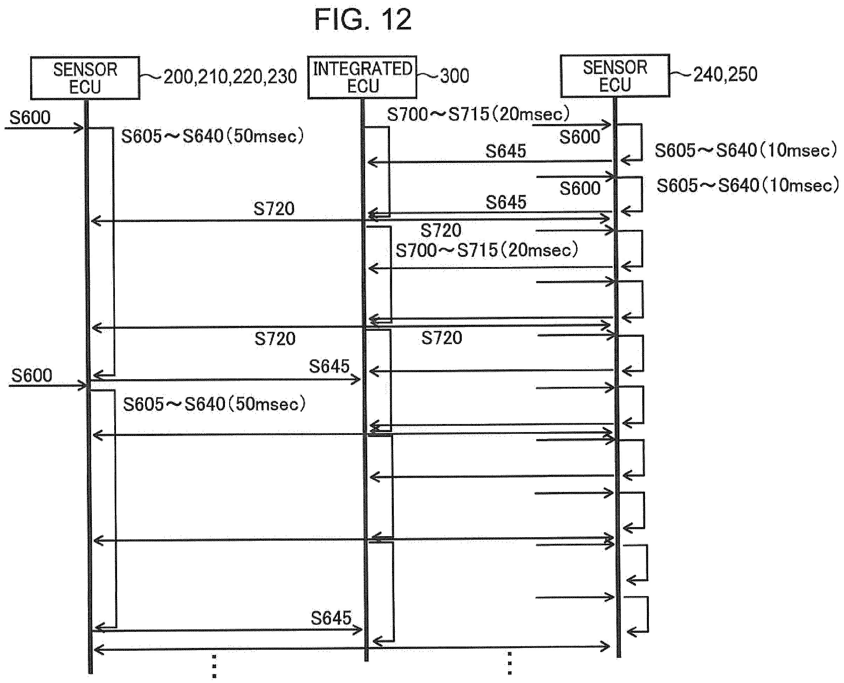

FIG. 12 is a sequence diagram schematically illustrating a procedure of data transmission and reception between the integrated ECU and the sensor ECU. In FIG. 12, the same steps as those in FIGS. 10 and 11 are denoted by the same reference numerals.

The sensor ECUs 200 to 230 acquire detection data every 50 msec (step S600), process the data (steps S605 to S640), and transmit the target data to the integrated ECU 300 (step S645). The sensor ECUs 240 and 250 acquire detection data every 10 msec (step S600), process the data (steps S605 to S640), and transmit the target data to the integrated ECU 300 (step S645). The integrated ECU 300 receives and processes data every 20 msec (steps S700 to S715), and feeds back the ID of the top priority target to each of the sensor ECUs 200 to 250 (step S720).

(Effect)

As described above, in the present embodiment, a specific divided region is set among the first to eleventh divided regions DA1 to DA11 obtained by dividing the peripheral region SA of the vehicle 10, and a target set number is set in the specific divided region. Then, when a target exists in the specific divided region, target data on the number of targets, equal to or smaller than the target set number, is transmitted to the integrated ECU 300. Thus, according to the present embodiment, the target data on the target existing in the specific divided region can be reliably transmitted to the integrated ECU 300.

In the present embodiment, each of the sensor ECUs 200 to 250 transmits a predetermined number of target data (e.g., 12 in the present embodiment) or less to the integrated ECU 300. Thus, according to the present embodiment, the amount of data transmitted through each of the sensor cables 600 to 650 can be reduced. As a result, the sensor cables 600 to 650 can each have a small communication capacity, and hence, increase in cost of each of the sensor cables 600 to 650 can be prevented.

In the present embodiment, a divided region according to an operation state of drive assist control by the drive assist CPU 310, among the first divided region DA1 to the eleventh divided region DA11, is set as the specific divided region. For example, when there is no drive assist control, the first to third and ninth divided regions DA1 to DA3 and DA9 are each set as the specific divided region. For example, when the follow-up traveling control is performed and the lane keeping assist control is not performed, the fourth to sixth divided regions DA4 to DA6 are each set as the specific divided region. For example, when the lane keeping assist control is performed and the follow-up traveling control is not performed, the ninth divided region DA9 is set as the specific divided region. For example, when the follow-up traveling control is performed and the lane keeping assist control is performed, the fourth to sixth and ninth divided regions DA4 to DA6 and DA9 are each set as the specific divided region. Thus, according to the present embodiment, target data required for the drive assist control including the follow-up traveling control, the lane keeping assist control, and the like can be reliably transmitted to the integrated ECU 300.

(Modified embodiment)

In the above embodiment, the specific divided region information 20 (FIG. 4) is stored in the memory 302 of the integrated ECU 300. However, the present disclosure is not limited thereto, and the specific divided region information 20 may be stored in each of the memories 202 to 252 of the corresponding sensor ECUs 200 to 250. In this case, the CPU 301 of the integrated ECU 300 may notify each of the sensor ECUs 200 to 250 of information indicating an ON-OFF state of the ACC switch 160 and the LAS switch 170. The CPUs 201 to 251 of the corresponding sensor ECUs 200 to 250 each may set the specific divided region and the target set number based on the information notified from the CPU 301 and the specific divided region information 20 (FIG. 4) stored in the corresponding one of the memories 202 to 252.

The specific embodiment described above mainly includes the invention having the following configuration.

An aspect of the technique disclosed herein is a target detection device for a vehicle, the target detection device provided in a vehicle and includes:

> a detector which is configured to detect at least one target existing in a peripheral region of the vehicle;
> a detection controller which is configured to output target data on the at least one target selected based on a predetermined criterion among the at least one target detected by the detector;
> a central controller which is configured to control the vehicle based on the target data output from the detection controller;
> a storage which stores divided region information representing a plurality of divided regions generated by preliminarily dividing the peripheral region; and
> a drive assist controller which is configured to perform control to assist driving of the vehicle by a driver, wherein
> the detection controller is configured to select at least one first target in preference to at least one second target, the at least one first target being detected in one or more first divided regions of the plurality of divided regions, the one or more first divided regions being set according to an operation state of the drive assist controller, the at least one second target being detected in a second divided region other than the one or more first divided regions.

According to this aspect, when a divided region in which a target, which is necessary for control of the vehicle according to an operation state of the drive assist controller, exists is set as the first divided region, the central controller can preferentially acquire target data necessary for control of the vehicle. The second target is merely not selected in preference to the first target, and hence, the second target may be selected. Accordingly, it is possible to prevent a situation in which the central controller cannot acquire target data on the target.

In the above aspect, for example, the central controller may set one or more divided regions among the plurality of divided regions as the first divided region according to an operation state of the drive assist controller. In the above aspect, for example, the detection controller may set one or more divided regions among the plurality of divided regions as the first divided region according to an operation state of the drive assist controller.

In the above aspect, for example, a first maximum number may be set for each of the one or more first divided regions, a second maximum number larger than a total of the first maximum number may be set, and the detection controller may be configured to execute: first processing of selecting, in each of the one or more first divided regions, the first maximum number of the at least one first target when the number of the at least one first target exceeds the first maximum number, and selecting all of the at least one first target when the number of the at least one first target is equal to or less than the first maximum number; and second processing of further selecting, when at least any one of the at least one second target and at least one unselected first target other than the at least one first target having been selected in the first processing exists, the at least one target among the at least one second target and the at least one unselected first target in addition to the at least one first target having been selected in the first processing, by setting the second maximum number as a maximum.

According to this aspect, a target is selected by setting the second maximum number as the maximum. Hence, the amount of target data output from the detection controller can be prevented from being excessive. Furthermore, the number of at least one first target detected in the first divided region is always selected to be equal to or less than the first maximum number. Hence, the central controller can reliably acquire target data on the first maximum number or less of at least one first target. In addition to the at least one first target having been selected in the first processing, the at least one target is further selected from among the at least one second target and the at least one unselected first target up to the second maximum number. Hence, a situation where the central controller cannot acquire target data on the at least one second target can be prevented as much as possible.

In the above aspect, for example, the central controller may set the first maximum number for each of the one or more first divided regions. In the above aspect, for example, the detection controller may set the first maximum number for each of the one or more first divided regions.

In the above aspect, for example, the storage may store, as the divided region information, information indicating a collision avoidance region which is a divided region generated close to a front of the vehicle in the peripheral region, and information indicating a follow-up traveling region which is a divided region generated ahead of the collision avoidance region, the drive assist controller may be configured to be able to perform follow-up traveling control which causes the vehicle to travel following a preceding vehicle traveling ahead of the vehicle, and the collision avoidance region may be set as the first divided region, when the drive assist controller does not perform the follow-up traveling control.

According to this aspect, when the follow-up traveling control is not performed, the central controller can preferentially acquire target data on a target existing in the collision avoidance region generated close to the front of the vehicle. Thus, the vehicle can be controlled in consideration of a target close to the vehicle.

In the above aspect, for example, when the drive assist controller does not perform the follow-up traveling control, the central controller may set the collision avoidance region as the first divided region. In the above aspect, for example, when the drive assist controller does not perform the follow-up traveling control, the detection controller may set the collision avoidance region as the first divided region.

In the above aspect, for example, the follow-up traveling region may be set as the first divided region, when the drive assist controller performs the follow-up traveling control.

According to this aspect, when the follow-up traveling control is performed, the central controller can preferentially acquire target data on a target existing in the follow-up traveling region generated in front of the collision avoidance region. Thus, the follow-up traveling control for following a preceding vehicle existing in the follow-up traveling region can be appropriately performed.

In the above aspect, for example, when the drive assist controller performs the follow-up traveling control, the central controller may set the follow-up traveling region as the first divided region. In the above aspect, for example, when the drive assist controller performs the follow-up traveling control, the detection controller may set the follow-up traveling region as the first divided region.

In the above aspect, for example, the storage may store, as the divided region information, information indicating a rear side region which is a divided region generated on a rear side of the vehicle, the drive assist controller may be configured to be able to perform lane keeping assist control for maintaining a lane in which the vehicle travels, and the rear side region may be set as the first divided region, when the drive assist controller performs the lane keeping assist control.

According to this aspect, the central controller can preferentially acquire target data on a target existing in the rear side region generated on the rear side of the vehicle. Thus, the lane keeping assist control can be appropriately performed in consideration of a following vehicle approaching from behind the vehicle.

In the above aspect, for example, when the drive assist controller performs the lane keeping assist control, the central controller may set the rear side region as the first divided region. In the above aspect, for example, when the drive assist controller performs the lane keeping assist control, the detection controller may set the rear side region as the first divided region.

**Claims**

1. A target detection device for a vehicle, the target detection device provided in a vehicle and comprising:

   a detector which is configured to detect at least one target existing in a peripheral region of the vehicle;
   a detection controller which is configured to output target data on the at least one target selected based on a predetermined criterion among the at least one target detected by the detector;
   a central controller which is configured to control the vehicle based on the target data output from the detection controller;
   a storage which stores divided region information representing a plurality of divided regions generated by preliminarily dividing the peripheral region; and
   a drive assist controller which is configured to perform control to assist driving of the vehicle by a driver, wherein
   the detection controller is configured to select at least one first target in preference to at least one second target, the at least one first target being detected in one or more first divided regions of the plurality of divided regions, the one or more first divided regions being set according to an operation state of the drive assist controller, the at least one second target being detected in a second divided region other than the one or more first divided regions.

2. The target detection device for a vehicle according to claim 1, wherein
   a first maximum number is set for each of the one or more first divided regions,
   a second maximum number larger than a total of the first maximum number is set, and
   the detection controller is configured to execute:

   first processing of selecting, in each of the one or more first divided regions, the first maximum number of the at least one first target when the number of the at least one first target exceeds the first maximum number, and selecting all of the at least one first target when the number of the at least one first target is equal to or less than the first maximum number; and
   second processing of further selecting, when at least any one of the at least one second target and at least one unselected first target other than the at least one first target having been selected in the first processing exists, the at least one target among the at least one second target and the at least one unselected first target in addition to the at least one first target having been selected in the first processing, by setting the second maximum number as a maximum.

3. The target detection device for a vehicle according to claim 1 or 2, wherein
the storage stores, as the divided region information, information indicating a collision avoidance region which is a divided region generated close to a front of the vehicle in the peripheral region, and information indicating a follow-up traveling region which is a divided region generated ahead of the collision avoidance region,
the drive assist controller is configured to be able to perform follow-up traveling control which causes the vehicle to travel following a preceding vehicle traveling ahead of the vehicle, and
the collision avoidance region is set as the first divided region, when the drive assist controller does not perform the follow-up traveling control.

4. The target detection device for a vehicle according to claim 3, wherein
the follow-up traveling region is set as the first divided region, when the drive assist controller performs the follow-up traveling control.

5. The target detection device for a vehicle according to any one of claims 1 to 4, wherein
the storage stores, as the divided region information, information indicating a rear side region which is a divided region generated on a rear side of the vehicle,
the drive assist controller is configured to be able to perform lane keeping assist control for maintaining a lane in which the vehicle travels, and
the rear side region is set as the first divided region, when the drive assist controller performs the lane keeping assist control.

# FIG. 1

# FIG. 2

# FIG. 3

Sa

| | FORWARD | BACKWARD |
|---|---|---|
| DA1 | AS4 | AS3 |
| DA2 | AS3 | AS3 |
| DA3 | AS3 | AS3 |
| DA4 | AS2 | 0 |
| DA5 | AS2 | 0 |
| DA6 | AS2 | 0 |
| DA7 | AS1 | 0 |
| DA8 | AS1 | 0 |
| DA9 | AS3 | AS4 |
| DA10 | 0 | AS3 |
| DA11 | 0 | AS2 |

$$0 < AS1 < AS2 < AS3 < AS4$$

# FIG. 4

20

| OPERATION STATE OF DRIVE ASSIST CONTROL (21) | SPECIFIC DIVIDED REGION (22) | TARGET SET NUMBER (23) |
|---|---|---|
| NONE | FIRST DIVIDED REGION | 4 |
| | SECOND, THIRD, NINTH DIVIDED REGIONS | 1 |
| ACC-ON, LAS-OFF | FOURTH, FIFTH, SIXTH DIVIDED REGIONS | 1 |
| ACC-OFF, LAS-ON | NINTH DIVIDED REGION | 1 |
| ACC-ON, LAS-ON | FOURTH, FIFTH, SIXTH, NINTH DIVIDED REGIONS | 1 |

# FIG. 5

START

S100

ACC SWITCH IS OFF AND LAS SWITCH IS OFF? — YES → FIRST SETTING PROCESSING — S105

NO

S110

ACC SWITCH IS ON AND LAS SWITCH IS OFF? — YES → SECOND SETTING PROCESSING — S115

NO

S120

ACC SWITCH IS OFF AND LAS SWITCH IS ON? — YES → THIRD SETTING PROCESSING — S125

NO

S130

ACC SWITCH IS ON AND LAS SWITCH IS ON? — YES → FOURTH SETTING PROCESSING — S135

NO

ERROR PROCESSING — S145

TRANSMIT SET CONTENT TO EACH SENSOR ECU — S140

RETURN

# FIG. 6

```
┌─────────────────────────────────────┐
│    FIRST SETTING PROCESSING          │
└─────────────────────────────────────┘
                  │
                  ▼                      ⌒ S200
┌─────────────────────────────────────┐
│  SET FIRST DIVIDED REGION TO HAVE    │
│     TARGET SET NUMBER OF 4           │
│   AND EACH OF SECOND, THIRD,         │
│  NINTH DIVIDED REGIONS TO HAVE       │
│     TARGET SET NUMBER OF 1           │
└─────────────────────────────────────┘
                  │
                  ▼
           ┌──────────────┐
           │   RETURN     │
           └──────────────┘
```

# FIG. 7

SECOND SETTING PROCESSING

S300

SET EACH OF FOURTH, FIFTH, SIXTH
DIVIDED REGIONS TO HAVE
TARGET SET NUMBER OF 1

RETURN

# FIG. 8

THIRD SETTING PROCESSING

S400

SET NINTH DIVIDED REGION TO
HAVE TARGET SET NUMBER OF 1

RETURN

# FIG. 9

```
    ( FOURTH SETTING PROCESSING )
                    |
                    |           ⌒ S500
                    v
 ┌──────────────────────────────────────┐
 │   SET EACH OF FOURTH, FIFTH, SIXTH,   │
 │        NINTH DIVIDED REGIONS TO       │
 │   HAVE TARGET SET NUMBER OF 1         │
 └──────────────────────────────────────┘
                    |
                    v
              ( RETURN )
```

# FIG. 10

START

ACQUIRE DETECTION DATA ON TARGET — S600

PROCESS DATA AND GENERATE TARGET DATA
(ASSIGN ID, CALCULATE POSITION,CALCULATE
RELATIVE SPEED,CALCULATE RELIABILITY) — S605

DETERMINE DIVIDED REGION
WHERE TARGET EXIST — S610

CALCULATE PRIORITY SCORE OF TARGET — S615

READ OUT SPECIFIC DIVIDED REGION
WITH TARGET SET NUMBER SET — S620

SELECT TARGETS IN SPECIFIC DIVIDED
REGION UP TO TARGET SET NUMBER
IN THE ORDER OF PRIORITY SCORE — S625

CALCULATE THE NUMBER OF
TARGETS HAVING BEEN SELECTED — S630

SELECT TARGETS OTHER THAN TARGETS
HAVING BEEN SELECTED UP TO PREDETERMINED
NUMBER TOGETHER WITH THE NUMBER OF
TARGETS HAVING BEEN SELECTED
IN THE ORDER OF PRIORITY SCORE — S635

DELETE TARGET DATA ON TARGET
OTHER THAN SELECTED TARGET — S640

TRANSMIT TARGET DATA ON SELECTED TARGET — S645

RETURN

23

# FIG. 11

```
        ( START )
            │
            ▼
┌────────────────────────────────┐  ╭─ S700
│ START RECEIVING DATA, AND STORE │
│ RECEIVED TARGET DATA IN MEMORY  │
└────────────────────────────────┘
            │
            ▼
┌────────────────────────────────┐  ╭─ S705
│ CHECK RELIABILITY OF EACH TARGET,│
│  AND DELETE TARGET DATA EQUAL   │
│ TO OR LESS THAN THRESHOLD VALUE │
└────────────────────────────────┘
            │
            ▼
┌────────────────────────────────┐  ╭─ S710
│    SELECT TOP PRIORITY TARGET   │
└────────────────────────────────┘
            │
            ▼
┌────────────────────────────────┐  ╭─ S715
│   OPERATE EACH PART OF VEHICLE  │
│    ACCORDING TO TARGET DATA     │
│      ON TOP PRIORITY TARGET     │
└────────────────────────────────┘
            │
            ▼
┌────────────────────────────────┐  ╭─ S720
│   FEED BACK ID OF TOP PRIORITY  │
│    TARGET TO EACH SENSOR ECU    │
└────────────────────────────────┘
            │
            ▼
        ( RETURN )
```

24

# FIG. 12

EP 3 709 279 A1

## INTERNATIONAL SEARCH REPORT

International application No.

PCT/JP2018/042421

### A. CLASSIFICATION OF SUBJECT MATTER

Int.Cl. G08G1/16(2006.01)i, G01S13/86(2006.01)i, G01S13/93(2006.01)i, G01S15/93(2006.01)i, G01S17/93(2006.01)i, B60W30/095(2012.01)i, B60W30/12(2006.01)i, B60W30/14(2006.01)i, B60W40/02(2006.01)i

According to International Patent Classification (IPC) or to both national classification and IPC

### B. FIELDS SEARCHED

Minimum documentation searched (classification system followed by classification symbols)

Int.Cl. G08G1/00-1/16, G01S13/86, G01S13/93, G01S15/93, G01S17/93, B60W30/08-30/17, B60W40/02-40/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | JP 2008-40603 A (HONDA MOTOR CO., LTD.) 21 February 2008, paragraphs [0013]-[0036], fig. 3 (Family: none) | 1<br>2-5 |
| X<br>A | JP 5-203737 A (MAZDA MOTOR CORPORATION) 10 August 1993, claims, paragraphs [0009]-[0010], [0016]-[0025], fig. 4-5, 9 & US 5461357 A, claims, column 2, line 6 to column 2, line 33, column 4, line 59 to column 7, line 10, fig. 4-5, 9 & DE 4302527 A1 | 1<br>2-5 |
| A | JP 2002-362396 A (NISSAN MOTOR CO., LTD.) 18 December 2002, entire text (Family: none) | 1-5 |

☐ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 February 2019 (06.02.2019) | 19 February 2019 (19.02.2019) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009058316 A